# EUROPEAN PATENT APPLICATION

(11) **EP 1 923 880 A1**
(43) Date of publication of application: **21.05.2008**
(21) Application number: 06024040.5
(22) Date of filing: 20.11.2006
(51) Int. Cl.: G11B 7/24

(54) **Smart video card**

(71) Applicant: ODS Technology GmbH, 23942 Dassow (DE)
(72) Inventor: Nute, Roger, 49490 Chigné (FR); Fetouhi, Al, 77100 Nanteuil-lès-Meaux (FR)
(74) Representative: Peterreins, Frank

(57) **Abstract**

The present invention relates to a storage element carrier (20) comprising a first part (21) with a storage element (30) and a second part (22) with an optical recording medium (10). The invention further relates to an optical recording medium (10) comprising a clamping area (1), a recording area (2) and an outer area (3) outside of the recording area (2). According to a first or second aspect of the invention a first elevated ring (4) or a first set of protrusions (4') respectively is located in the clamping area (1). According to a third aspect of the invention the thickness (T2) of the optical recording medium (10) in at least one part of the recording area (2) is smaller than the thickness (T1) of the optical recording medium (10) in the clamping area (1). According to a fourth aspect the thickness (T3) of the optical recording medium (10) in at least one part of the outer area (3) is greater than the thickness (T2) in the recording area (2).

## Description

### Field and background of the invention

The present invention relates to a storage element carrier, in particular a chip card, which comprises a storage element, in particular a chip, in a first part and an optical recording medium, in particular an optical disc, in a second part.

Chip cards, or also known as smart cards, have been invented in the 1970s and have become of great importance in every day life. The major boom in smart card use came in Europe in the 1990s with the introduction of smart-card-based electronic purse systems, like payment cards, and the smart-card-based SIM used in GSM mobile phone equipment. Nowadays applications for chip cards include their use in credit or ATM cards, SIMS for mobile phones, authorization cards, high-security identification cards or access-control cards, public transport or public phone payment cards and many more.

When inserted into a reader, the chip makes contact with electrical connectors that can read information from the chip and write information back. This is known as the contact smart card. The standard for these smart cards is ISO/IEC 7816 and ISO/IEC 7810. According to these standards, the thickness of a chip card is about 0.8 mm.

Also contactless smart cards have been developed, in which the chip communicates with the card reader through RFID induction technology, when in the proximity of an antenna. The standard for contactless smart card communication is ISO/IEC 14443 or ISO 15693.

Combining a chip card with an optical data storage element is known from DE 199 43 092 A1, which relates to a storage element device, especially a chip card, which comprises a first segment, comprising a semiconductor circuit, and a second segment, comprising a magnetic and/or optical data memory. Between the first segment and the second segment a disconnect or parting line is at least partially provided by means of which the first segment can be detached, preferably by hand, from the second segment.

WO 2004/006179 A1 discloses a storage element device comprising a first data storage element, for example a GSM plug, and a second data storage element, for example an optical data storage element, like a CD. The first data storage element is inserted into the second data storage element and the first data storage element is removable from the second data storage element. The first data storage element and the second data storage element are made of two different materials so as to reduce costs.

An important aspect is the stability and playability of the optical recording medium in a recording and/or reproducing device, like a CD or DVD player or recorder. A conventional CD has a thickness of 1.2 mm, which is much thicker than thickness of 0.8 mm of an ISO format chip card. According to the DVD specifications, the requirements for the thickness of a DVD are less restrictive on the other hand. A DVD may be thinner than 1.2 mm, therefore it can manufactured with less material and is light weight. Additionally, a DVD can store more information in the same recording area than a CD. Nevertheless, the playability and stability of a thin DVD needs to be guaranteed and has been a major problem so far. Sufficient weight has to be provided for the inertia moment, when the DVD is spinned in a DVD player or recorder, and the stability of the disc has to be guaranteed. There are two main standards for DVDs, namely the 120 mm and the 80 mm DVD. In particular 80 mm DVDs are of interest for the use in smart card applications.

### Objects and summary of the invention

It is an object of the present invention to provide an optical recording medium, in particular comprised in a storage element carrier, which is light weight, and thus material-saving, but provides at the same time sufficient weight for playability and stability of the optical recording medium. It is a further object of the present invention to provide an optical recording medium which provides protection against scratching of the recording are.

This object is achieved by an optical recording medium as defined in claims 1, 5, 11 and 12 and a storage element carrier as defined in claim 39. The dependent claims depict advantageous embodiments of the invention.

The present invention refers to a storage element carrier, in particular a chip card, comprising a first part with a storage element, which may be suitable to be read by a reading device, and a second part with an optical recording medium. The storage element may be an electronically readable device, in particular an integrated circuit or chip, on which information can be stored. By inserting the first part at least partially into a reading device or putting it into the proximity of a reading device, the information stored on the storage element can be read or written. At the same time the second part may remain outside of a reading device.

If the storage element carrier complies with the ISO format, the thickness of the first part has to be about 0.8 mm in order to be suitable to be inserted into a reading device. The form of the storage element carrier is then of rectangular shape with the dimensions given in the ISO standard. Although it seems preferable that the storage element carrier is of rectangular shape, it is pointed out that also any other polygonal shape, for example quadratic or octagonal, is meant to be in the scope of this invention.

Between the first part and the second part a predetermined break line may be provided, which may be used to break the storage element carrier into the first and the second part by applying a force to it. Thus, by providing a storage element carrier, the optical recording medium can be obtained by breaking away the second part. The optical recording medium may then be put into a recording and/or reproducing device.

The second part, comprising the optical storage medium, may be adapted in such a way as to provide sufficient weight for the inertia moment when the second part comprising the optical recording medium is spinned in the recording and/or reproducing device. The thickness of the second part of the storage element carrier may be in the range of 0.8 to 1.3 mm, in particular 1.0 to 1.2 mm. An additional layer may be integral with, meaning part of, or connected to the first part of the storage element carrier. In one embodiment the additional layer and the first part are made of one piece, separated only by the predetermined break line. The additional layer and the first part of the storage element carrier may be made of plastic material in one single moulding step. The thickness of the additional layer may be greater than 0.2 mm, in particular 0.4 mm.

The additional layer may become part of in the optical recording medium, when the storage element device is broken apart. The additional layer may be connected to a second side of the optical recording medium, which is opposite to the first side from which the optical recording medium can be optically read. Although the optical recording medium is preferably bonded to the additional layer of the second part, in particular by an adhesive, any other conventional way of connecting is also suitable. The additional layer may comprise a hole of basically the same form and at basically the same position as the centre hole of the optical recording medium so that the optical recording device can be fixed in a recording and/or reproducing device.

Now, the description will focus on the optical recording medium, which comprises a clamping area, a recording area and an outer area outside of the recording area.

The recording area and/or the outer area may be made of polycarbonate material. Alternatively, the outer area may also be made of another material. The clamping area may also be made of polycarbonate material, but another material is also within the scope of protection of this invention.

The clamping area may be located in the centre of the optical recording medium for clamping the optical recording medium in a recording and/or reproducing device. Especially, a centre hole may be located in the centre of the optical recording medium for clamping. The clamping area may have a circular or oval shape. In one embodiment, the clamping area is defined by an area located within in a radius of about 17 mm with respect to the centre of the optical recording medium.

According to a first aspect of the invention a first elevated ring may be located in the clamping area. Further, at least one further elevated ring may be located in the clamping area. The rings may be arranged concentrically to each other in the clamping area. In one embodiment of the invention at least two rings are of equal thickness in a direction perpendicular to the surface of the optical recording medium.

According to a second aspect of the invention, instead of the rings, a first set of protrusions may be located in the clamping area. Further, at least one further set of protrusions may be located in the clamping area. The sets of protrusions may be arranged concentrically to each other within the clamping area, especially they may be arranged along a radius in respect to the centre of the optical recording medium. The form of the protrusions may be round-shaped, circle segments or any other suitable shape. In one embodiment at least two sets of protrusions are of equal thickness in a direction perpendicular to the surface of the optical recording medium.

The ring(s) or set(s) of protrusions may be used for clamping of the optical recording medium in a recording and/or reproducing device.

According to a third aspect of the invention, the thickness of the optical recording medium in at least one part of the recording area is smaller than the thickness of the optical recording medium in the clamping area, especially at the most elevated point of the clamping area. The most elevated point may for example be the ring(s) or set(s) of protrusions discussed above. By elevating the clamping area in respect to the recording area on the first side, from which the optical recording medium can be optically read, the optical recording medium may be relatively thin in the recording area, compared to a conventional DVD for example. Therefore, the optical recording medium is lighter, material is saved and therefore it is also less expensive.

According to a fourth aspect of the invention the thickness of the optical recording medium in at least one part of the outer area is greater than the thickness in the recording area. Preferably, the outer area is elevated in such a way as to provide sufficient weight for the inertia moment when the optical recording medium is spinned in a recording and/or reproducing device. By elevating the outer area in respect to the recording area on the first side, from which the optical recording medium can be optically read, the optical recording medium provides enough weight in the outer areas so, when the optical recording medium is spinned, the masses in the outer areas are accelerated and thus provide a sufficient inertia moment. Also, the outer areas guarantee stability of the optical recording medium.

To balance the objects to, on the one hand, reduce the thickness and use of material of the optical recording medium, but to, on the other hand, provide enough weight for the inertia moment, when spinning, requires a well elaborated trade-off which is disclosed by the present invention. By elevating at least one part of the clamping area and/or the outer area of the optical recording medium, another effect may be protection against scratching of the recording area, in which the information is stored and which is highly sensitive. Therefore, the most elevated point(s) of the clamping area and/or the outer area on the first side of the optical recording medium may be at a distance of less than 0.2 mm, in particular about 0.1 mm, from the surface of the recording area on the first side.

The optical recording medium comprises at least one first layer, at least in the recording area, made of polycarbonate and at least one additional layer made of plastic material. The additional layer may be adapted in such a way as to provide sufficient weight for the inertia moment when the optical recording medium is spinned in a recording and/or reproducing device. Thus, in one embodiment the thickness of the additional layer is greater than 0.2 mm, in particular about 0.4 mm. The additional layer may also provide stability of the optical recording medium.

Like a conventional DVD, the optical recording medium may comprise at least one recording layer in the recording area, which is to be optically read from the first side of the optical recording medium. The optical recording medium may be a DVD, which can be read from the first side with a laser beam having a wavelength of about 650 nm. In case it is a CD, it is read from the first side with a laser beam having a wavelength of about 780 nm. A DVD with only one recording layer is known as a single layer DVD, wherein a dual layer DVD comprises two recording layers. In order to provide a sufficient refractive index as defined in the DVD specifications, the recording layer has to be at least partially positioned at a distance of more than 0.4 mm from the surface of the recording area on the first side. In particular a distance of about 0.55 to 0.6 mm is preferable. When the optical recording medium is elevated in the clamping area and/or the outer area on the first side of the optical recording medium, the recording layer may be at least partially positioned at a distance of more than 0.5 mm, in particular about 0.65 to 0.7 mm, from those most elevated point(s).

The total thickness of the optical recording medium is the maximum thickness among the thicknesses in the clamping area and/or the outer area plus, if present, the thickness of the additional layer. A preferred total thickness of the optical recording medium may be in the range of 0.8 to 1.3 mm, in particular 1.0 to 1.2 mm. It has to be pointed out, even though in a preferred embodiment the optical recording medium comprises an additional layer, for example made of plastic, an additional layer is not required in the present invention.

The optical recording medium may have a polygonal shape with a predetermined number of sides defining corners in between. Although in a preferred embodiment this shape is rectangular or quadratic, it has to be pointed that also other polygonal shapes like triangular or octagonal lie within the scope of protection. With rectangular it is meant that opposite sides are approximately parallel to each other, as it is also the case for a trapezoidal shape for example. The corners of the polygonal shape of the optical recoding medium may be rounded with a predetermined radius in order to safe material and to reduce the likelihood of injuries of the user due to sharp corners.

The recording area of the optical recording medium may have a circular or oval shape. In one embodiment the recording area has a "basically" circular or oval shape, which means that at least one segment of the circular or oval shape is missing. In other words, the outer edges of the recording area are formed by at least one circle segment and at least one straight line or linear element. Preferably the segments of the circular or oval shape of the recording area are missing on at least two opposite sides of the polygonal shape of the optical recording medium.

Given that the optical recording medium has a rectangular or quadratic shape, the outer area may be formed by four outer area elements, each located outside of the recording area in a corner of the rectangular or quadratic optical recording medium. In order to comply with the DVD standard for 80 mm DVD, the diameter of the of the optical recording medium, which is the distance between two radially opposite corners of the optical recording medium, has to be about 80 mm diameter. Therefore, in a preferred embodiment, the rectangular or quadratic shape of the optical recording medium has a height in the range of 53.5 to 54.5 mm, in particular 53.85 ± 0.15 mm, and a width in the range of 53.5 to 70 mm, in particular 62.5 ± 0.5 mm.

### Brief description of the drawings

- **Fig. 1a**: shows a cross-section of the storage element carrier in one embodiment of the present invention;
- **Fig. 1b**: shows a bottom view of the storage element carrier of Fig. 1 a;
- **Fig. 2**: shows a cross-section of an optical recording medium according to one embodiment of the invention;
- **Fig. 3**: shows a top view and a cross-section of an optical recording medium according to one embodiment of the invention; and
- **Fig. 4**: shows a top view and a cross-section of an optical recording medium according to another embodiment of the invention.

### Detailed description of the invention

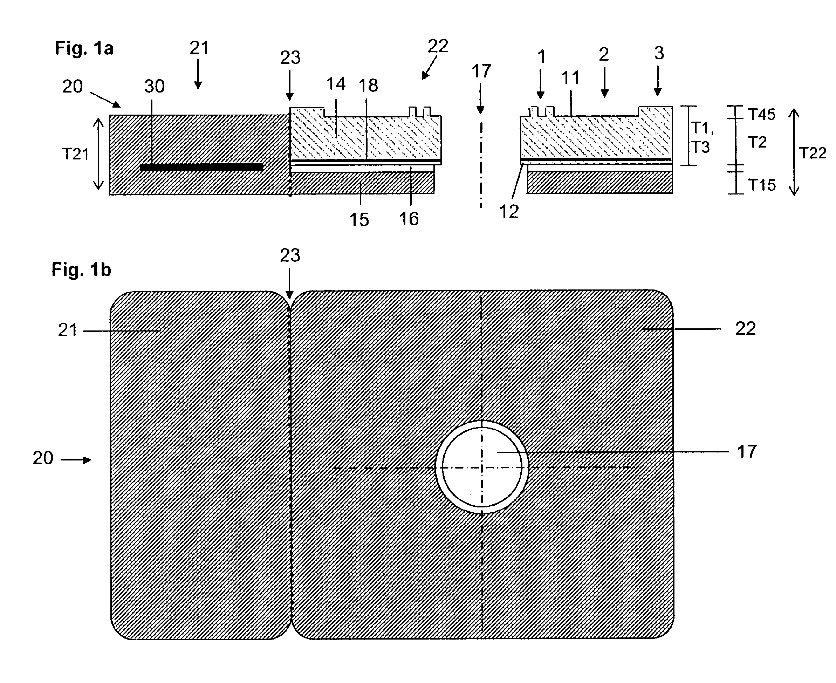

**Fig. 1a** and **Fig. 1b** show a cross-section and a respective bottom view of the storage element carrier **20** in one embodiment of the present invention. The storage element carrier **20** comprises a first part **21** with a storage element **30,** which may be suitable to be read by a reading device (not shown), and a second part **22** with an optical recording medium **10**. In this embodiment the storage element carrier **20** is a chip card, wherein the storage element **30** is an electronically readable device, in particular an integrated circuit or chip, on which information can be stored. The chip **30** in **Fig. 1a** and **1b** is located in the interior of the first part **21** of the chip card **20** for contactless communication with a card reading device when brought in proximity, through RFID technology for example. It has to be pointed out that a contact chip card is as well in the scope of protection, in which the chip **30** would be at a surface of the first part **21** of the chip card **20,** so when inserted into a reading device, the chip **30** would make contact with electrical connectors. By inserting the first part **21** at least partially into a reading device or putting it into the proximity of a reading device, the information stored on the chip **30** can be read or written. At the same time the second part **22** may remain outside of a reading device.

The storage element carrier **20** shown in **Fig. 1a** and **1b** may comply with the ISO format, wherein the thickness **T21** of the first part **21** would be about 0.8 mm in order to be suitable to be inserted into a reading device. The chip card **20** has a rectangular shape, preferably with the dimensions given in the ISO standard. Between the first part **21** and the second part **22** a predetermined break line **23** is provided, which may be used to break the chip card **20** into the first **21** and the second **22** part by applying a force to it. Thus, by providing a chip card **20,** the optical recording medium **10** may be obtained by breaking away the second part **22** constituting the optical recording medium **10,** which can then be put into a recording and/or reproducing device.

The second part **22** comprising the optical storage medium **10** is adapted in such a way as to provide sufficient weight for the inertia moment when the second part **22** is spinned in the recording and/or reproducing device. Therefore, the thickness **T22** of the second part **22** of the chip card **20** is preferably in the range of 0.8 to 1.3 mm, in particular 1.0 to 1.2 mm. In **Fig. 1a** and **1b** an additional layer **15** is integral with, meaning part of, the first part **21** of the chip card **20.** The additional layer **15** and the first part **21** are made of one piece, separated only by the predetermined break line **23.** The additional layer **15** and the first part **21** of the storage element carrier **20** may be made of plastic material in one single moulding step.

The thickness **T15** of the additional layer **15** is preferably greater than 0.2 mm, in particular about 0,4 mm.

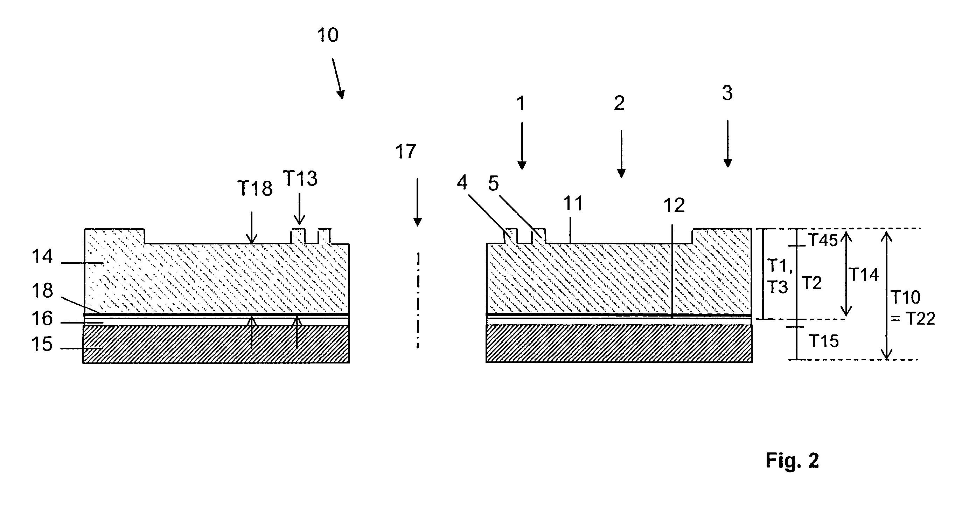

**Fig. 2** shows a cross-section of an optical recording medium **10** constituted by the second part **22,** when breaking apart the chip card **20** of **Fig. 1a** and **Fig. 1b.** When broken apart, the additional layer **15** becomes part of in the optical recording medium **10.** The additional layer **15** is connected to a second side **12** of the optical recording medium **10,** which is opposite to the first side **11** from which the optical recording medium **10** can be optically read. The bonding is achieved by means of an adhesive layer **16** for example. The additional layer **15** comprises a hole of basically the same form and at basically the same position as the centre hole **17** of the optical recording medium **10** so that it can be fixed in a recording and/or reproducing device.

In the embodiment of **Fig. 2,** the optical recording medium **10,** in particular an optical disc like a DVD, comprises a first layer **14** made of polycarbonate and the additional layer **15,** which may be made of plastic material. The additional layer **15** is adapted in such a way as to provide sufficient weight for the inertia moment when the optical recording medium **10** is spinned in a recording and/or reproducing device. Thus, the thickness **T15** of the additional layer is preferably greater than 0.2 mm, in particular about 0.4 mm. The additional layer **15** may also provide stability of the optical recording medium **10.**

The optical recording medium **10** comprises a clamping area 1, a recording area **2** and an outer area **3** outside of the recording area **2.** As an optical disc like a DVD, the optical recording medium **10** in **Fig. 2** comprises a recording layer **18** at least in the recording area **2,** which is to be optically read from the first side **11** of the optical recording medium **10.** If the optical recording medium **10** is a DVD, it can be read from the first side **11** with a laser beam having a wavelength of about 650 nm (in case of a CD a 780 nm laser is used). In order to provide a sufficient refractive index as defined in the DVD specifications, the recording layer **18** has to be at least partially positioned at a distance **T18** of more than 0.4 mm from the surface of the recording area **2** on the first side **11.** In particular a distance of about 0.55 to 0.6 mm is preferable. When the optical recording medium **10** is elevated in the clamping area **1** and/or the outer area **3** on the first side **11** of the optical recording medium **10** as shown in **Fig. 2,** the recording layer **2** may be at least partially positioned at a distance **T13** of more than 0.5 mm, in particular about 0.65 to 0.7 mm, from those most elevated points.

In **Fig. 2** the thickness **T2** of the optical recording medium **10** in the recording area **2** is smaller than the thickness **T1** of the optical recording medium **10** in the clamping area **1,** at the most elevated points of the clamping area **1** where the rings **4, 5** are located. By elevating the clamping area **1** in respect to the recording area **2** on the first side **11,** from which the optical recording medium **10** can be optically read, the optical recording medium **10** is relatively thin in the recording area **2,** compared to a conventional DVD for example. Therefore, the optical recording medium **10** is lighter, material is saved and therefore it is also less expensive.

Additionally the thickness **T3** of the optical recording medium **10** in **Fig. 2** in at the outer area **3** is greater than the thickness **T2** in the recording area **2.** The outer area **3** is elevated in such a way as to provide sufficient weight for the inertia moment when the optical recording medium **10** is spinned in a recording and/or reproducing device. By elevating the outer area **3** in respect to the recording area **2** on the first side **11,** from which the optical recording medium **10** can be optically read, enough weight is provided in the outer areas **3** so, when the optical recording medium **10** is spinned, the masses in the outer areas **3** are accelerated and thus provide a sufficient inertia moment. Also, the outer areas **3** guarantee stability of the optical recording medium **10.** In the embodiment of the present invention shown in **Fig. 2,** the objects to reduce the thickness and material of the optical recording medium **10,** and at the same time to provide enough weight for the inertia moment have been balanced in form of a well elaborated trade-off.

Additionally, by elevating at least one part of the clamping area **1** and/or the outer area **3** of the optical recording medium **10,** also protection against scratching of the recording area **2** is provided. The most elevated points of the clamping area **1** and the outer area **3** on the first side **11** of the optical recording medium **10** are preferably at a distance **T45** of less than 0.2 mm, in particular about 0.1 mm, from the surface of the recording area **2** on the first side **11.**

The total thickness **T10** of the optical recording medium **10** (which in **Fig. 2** corresponds to the thickness **T22** of the second part **22** of the storage element carrier **20** of Fig. **1a** and **1b**) is the maximum thickness among the thicknesses **T1, T3** in the clamping area **1** and/or the outer area **3** plus, if present, the thickness **T15** of the additional layer **15.** A preferred total thickness **T10** of the optical recording medium **10** may be in the range of 0.8 to 1.3 mm, in particular 1.0 to 1.2 mm.

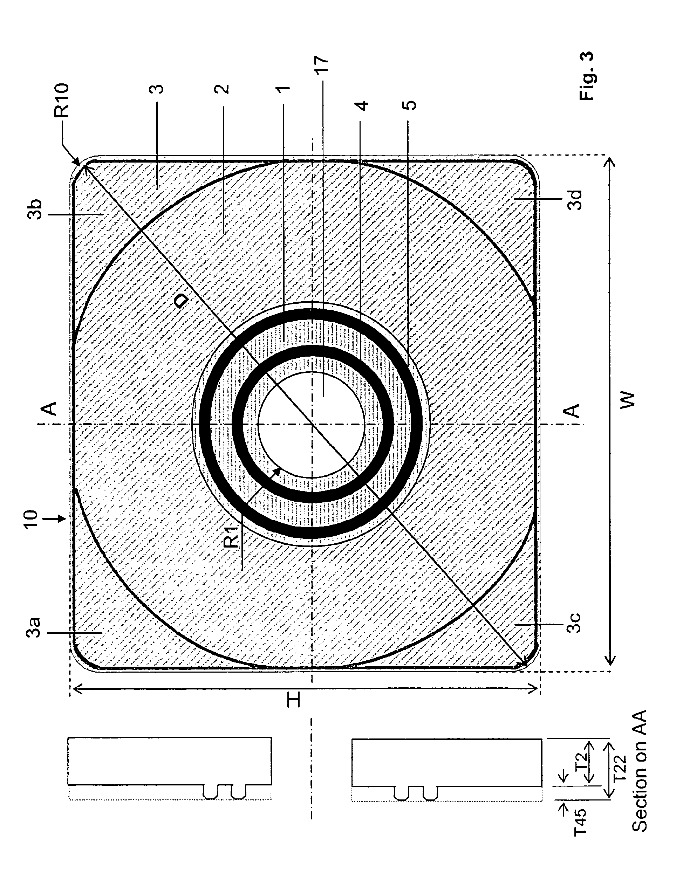

**Fig. 3** shows a top view and a cross-section of an optical recording medium according to one embodiment of the invention, wherein the top view clarifies the arrangement of the clamping area **1,** the recording area **2** and the outer area **3** outside of the recording area **2.** Preferably, the clamping area, the recording area **2** and the outer area **3** are all made of the same optically transparent material, like polycarbonate, in one single piece. But actually only the recording area **2** is required to be optically transparent. Therefore, the outer area **3** and/or the clamping area **1** may also be made of another material.

In **Fig. 3** the clamping area **1** is located in the centre of the optical recording medium **10** for clamping it in a recording and/or reproducing device. A centre hole **17** is located in the centre of the optical recording medium **10** for clamping. The clamping area **1** has a circular shape. Preferably, the clamping area is defined by an area located within in a radius **R1** of about 17 mm with respect to the centre of the optical recording medium **10.**

In the preferred embodiment of **Fig. 3** a first elevated ring **4** and a further second elevated ring **5** is located in the clamping area **1**. The rings **4, 5** are arranged concentrically to each other within the clamping area **1.** The two rings **4, 5** are of equal thickness **T45** in a direction perpendicular to the surface of the optical recording medium **10,** as can be seen in the cross section profile on the left side of **Fig. 3.**

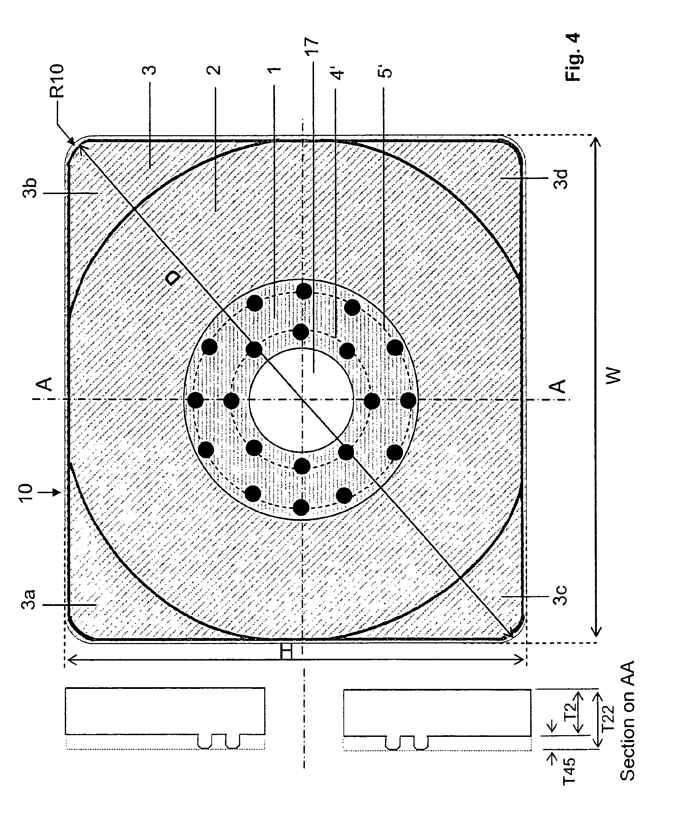

**Fig. 4** shows a top view and a cross-section of an optical recording medium **10** according another alternative embodiment of the present invention. Instead of the rings as in **Fig. 3,** a first set of protrusions **4'** and a further second set of protrusions **5'** is located in the clamping area **1.** The sets of protrusions **4', 5'** are arranged concentrically to each other within the clamping area **1** along a radius in respect to the centre of the optical recording medium **10.** The form of the protrusions in **Fig. 3** is round-shaped, but they may as well be circle segments or have any other suitable shape. The two sets of protrusions **4', 5'** are of equal thickness **T45** in a direction perpendicular to the surface of the optical recording medium **10,** as can be seen in the cross section profile on the left side of **Fig. 4.**

The rings or sets of protrusions as shown in **Fig. 3** and **4** may be used for clamping of the optical recording medium **10** in a recording and/or reproducing device and constitute the most elevated points in the clamping area as discussed above.

In **Fig. 3** and **4** the optical recording medium **10** has a rectangular form, which is a polygonal shape, with four sides defining corners at their ends. The corners of the rectangular shape of the optical recoding medium **10** are rounded with a predetermined radius **R10** in order to save material and to reduce the likelihood of injuries of the user due to sharp corners. The recording area **2** of the optical recording medium **10** has a "basically" circular shape, wherein two segments of the circular shape are missing on two opposite sides of the rectangular shape of the optical recording medium **10.** In other words, the outer edges of the recording area **2** are formed by two circle segments opposite to each other and two straight lines or linear elements in between.

Since the optical recording medium **10** has a rectangular shape in **Fig. 3** and **4,** the outer area **3** is formed by four outer area elements **3a, 3b, 3c, 3d,** each located outside of the recording area **2** in a corner of the rectangular optical recording medium **10.** In order to comply with the DVD standard for 80 mm DVD, the diameter **D** of the of the optical recording medium **10,** which is the distance between two radially opposite corners, has to be about 80 mm. Therefore, the rectangular shape of the optical recording medium **10** has preferably a height **H** in the range of 53.5 to 54.5 mm, in particular 53.85 ± 0.15 mm, and a width **W** in the range of 53.5 to 70 mm, in particular 62.5 ± 0.5 mm.

## Claims

1. Optical recording medium (10) comprising
a clamping area (1),
a recording area (2) and
an outer area (3) outside of the recording area (2),
wherein a first elevated ring (4) is located in the clamping area (1).

2. Optical recording medium according to claim 1, further comprising at least one further elevated ring (5) located in the clamping area (1).

3. Optical recording medium according to claim 2, **characterized in that** the rings (4, 5) are arranged concentrically to each other within the clamping area (1).

4. Optical recording medium according to claim 2 or 3, **characterized in that** at least two rings (4, 5) are of equal thickness (T45) in a direction perpendicular to the surface of the optical recording medium (10).

5. Optical recording medium (10) comprising
a clamping area (1),
a recording area (2) and
an outer area (3) outside of the recording area (2),
wherein a first set of protrusions (4') is located in the clamping area (1).

6. Optical recording medium according to claim 5, further comprising at least one further set of protrusions (5') located in the clamping area (1).

7. Optical recording medium according to claim 6, **characterized in that** the sets of protrusions (4', 5') are arranged concentrically to each other within the clamping area (1).

8. Optical recording medium according to claim 6 or 7, **characterized in that** at least two sets of protrusions (4', 5') are of equal thickness (T45) in a direction perpendicular to the surface of the optical recording medium (10).

9. Optical recording medium according to one of the preceding claims, **characterized in that** the thickness (T2) of the optical recording medium (10) in at least one part of the recording area (2) is smaller than the thickness (T1) of the optical recording medium (10) in the clamping area (1).

10. Optical recording medium according to one of the preceding claims, **characterized in that** the thickness (T3) of the optical recording medium (10) in at least one part of the outer area (3) is greater than the thickness (T2) in the recording area (2).

11. Optical recording medium comprising
a clamping area (1),
a recording area (2) and
an outer area (3) outside of the recording area (2),
wherein the thickness (T2) of the optical recording medium (10) in at least one part of the recording area (2) is smaller than the thickness (T1) of the optical recording medium (10) in the clamping area (1).

12. Optical recording medium comprising
a clamping area (1),
a recording area (2) and
an outer area (3) outside of the recording area (2),
wherein the thickness (T3) of the optical recording medium (10) in at least one part of the outer area (3) is greater than the thickness (T2) in the recording area (2).

13. Optical recording medium according one of the preceding claims, **characterized in that** the outer area (3) is elevated in such a way as to provide sufficient weight for the inertia moment when the optical recording medium (10) is spinned in a recording and/or reproducing device.

14. Optical recording medium according to one of proceeding claims, **characterized in that** at least one part of the clamping area (1) and/or the outer area (3) is elevated in such a way as to provide protection against scratching of the recording area (2).

15. Optical recording medium according to one of the preceding claims, **characterized in that** the optical recording medium (10) comprises at least one recording layer (18) in the recording area (2), which is to be optically read from a first side (11) of the optical recording medium (10).

16. Optical recording medium according to claim 15, **characterized in that** the recording layer (18) is at least partially positioned at a distance (T18) of more than 0.4 mm, in particular about 0.55 to 0.6 mm, from the surface of the recording area on the first side (11) of the optical recording medium (10).

17. Optical recording medium according to claim 16 or 17, **characterized in that** the recording layer (2) is at least partially positioned at a distance (T13) of more than 0.5 mm, in particular about 0.65 to 0.7 mm, from the most elevated point(s) of the clamping area (1) and/or the outer area (3) on the first side (11) of the optical recording medium (10).

18. Optical recording medium according to one of the claims 15 to 17, **characterized in that** the most elevated point(s) of the clamping area (1) and/or the outer area (3) on the first side (11) of the optical recording medium (10) are at a distance (T45) of less than 0.2 mm, in particular about 0.1 mm, from the surface of the recording area (2) on the first side (11).

19. Optical recording medium according to one of the proceeding claims, **characterized in that** the clamping area (1) is located in the centre of the optical recording medium (10) for clamping the optical recording medium in a recording and/or reproducing device.

20. Optical recording medium according to one of the proceeding claims, **characterized in that** the clamping area (1) has a circular or oval shape.

21. Optical recording medium according to one of the proceeding claims, **characterized in that** the clamping area (1) is defined by an area located within in a radius (R1) of about 17 mm with respect to the centre of the optical recording medium (10).

22. Optical recording medium according to one of the proceeding claims, **characterized in that** the recording area (2) has a circular or oval shape.

23. Optical recording medium according to one of the proceeding claims, **characterized in that** recording area (2) has basically a circular or oval shape, wherein at least one segment of the circular or oval shape is missing.

24. Optical recording medium according to one of the preceding claims, **characterized in that** the optical recording medium (10) has a polygonal shape with a predetermined number sides defining corners at their ends.

25. Optical recording medium according to claim 24, **characterized in that** segments of the circular or oval shape of the recording area (2) are missing on at least two opposite sides of the polygonal shape of the optical recording medium (10).

26. Optical recording medium according to claim 24 or 25, **characterized in that** the polygonal shape is rectangular or quadratic.

27. Optical recording medium according claim 25 or 26, **characterized in that** the outer area (3) is formed by four outer area elements (3a, 3b, 3c, 3d), each located outside of the recording area (2) in a corner of the rectangular or quadratic optical recording medium (10).

28. Optical recording medium according to one of the claims 25 to 27, **characterized in that** the diameter (D) of the polygonal shape of the optical recording medium (10), which is the distance between two radially opposite corners of the optical recording medium (10), is about 80 mm.

29. Optical recording medium according to one of the claims 24 to 28, **characterized in that** the corners of the polygonal shape of the optical recoding medium (10) are rounded with a predetermined radius (R10).

30. Optical recording medium according to one of the claims 24 to 29, **characterized in that** the rectangular or quadratic shape of the optical recording medium (10) has a height (H) in the range of 53.5 to 54.5 mm, in particular 53.85 ± 0.15 mm, and in a width (W) in the range of 53.5 to 70 mm, in particular 62.5 ± 0.5 mm.

31. Optical recording medium according to one of the preceding claims, **characterized in that** the recording area (2) and/or the outer area (3) is made of an optically transparent material, in particular polycarbonate.

32. Optical recording medium according to one of the preceding claims, **characterized in that** the clamping area (1) is made of an optically transparent material, in particular polycarbonate.

33. Optical recording medium according to one of the preceding claims, **characterized in that** the optical recording medium (10) comprises at least one first layer (14) made of an optically transparent material, in particular polycarbonate, and at least one additional layer (15) made of plastic material.

34. Optical recording medium according to claim 33, **characterized in that** the optical recording medium (10) is adapted in such a way as to provide sufficient weight for the inertia moment when the optical recording medium (10) is spinned in a recording and/or reproducing device.

35. Optical recording medium according to claim 33 or 34, **characterized in that** the thickness (T15) of the additional layer is greater than 0.2 mm, in particular about 0.4 mm.

36. Optical recording medium according to one of the preceding claims, **characterized in that** the thickness (T10) of the optical recording medium (10) is in the range of 0.8 to 1.3 mm, in particular 1.0 to 1.2 mm.

37. Optical recording medium according to one of the preceding claims, **characterized in that** the optical recording medium (10) has a centre hole (17) in its centre.

38. Optical recording medium according to one of the preceding claims, **characterized in that** the optical recording medium (10) is a DVD which can be read with a laser beam having a wavelength of about 650 nm.

39. Storage element carrier (20) comprising
a first part (21) comprising an storage element (30) and
a second part (22) comprising an optical recording medium (10) as claimed in one of the preceding claims.

40. Storage element carrier according to claim 39, further comprising a predetermined break line (23) between the first part (21) and the second part (22).

41. Storage element carrier according to claim 40, **characterized in that** the predetermined break line (23) is adapted in such a way that the storage element carrier (20) breaks into the first (21) and the second (22) part, when force is applied to the storage element carrier (20).

42. Storage element carrier according to one of the claims 39 to 41, **characterized in that** the first part (21) is adapted to be at least partially inserted into a reading device, wherein the second part (22) remains outside of a reading device.

43. Storage element carrier according to one of the claims 39 to 42, **characterized in that** the second part (22) further comprises an additional layer (15) integral with or connected to the first part (21) of the storage element carrier (20).

44. Storage element carrier according to claim 43, **characterized in that** the additional layer (21) of the second part (22) is comprised in the optical recording medium (10), wherein it is connected to a second side (12) of the optical recording medium (10), which is opposite to the first side (11) from which the optical recording medium (10) can be optically read.

45. Storage element carrier according to 43 or 44, **characterized in that** the additional layer (15) of the second part (22) is bonded to the optical recording medium (10), in particular by an adhesive.

46. Storage element carrier according one of the claims 43 to 45, **characterized in that** the additional layer (15) comprises a hole of basically the same form and at basically the same position as the centre hole (17) of the optical recording medium (10).

47. Storage element carrier according to one of the claims 39 to 45, **characterized in that** the second part (22) is adapted in such a way as to provide sufficient weight for the inertia moment when the second part (22) comprising the optical recording medium (10) is spinned in a recording and/or reproducing device.

48. Storage element carrier according to one of the claims 43 to 47, **characterized in that** the thickness (T 15) of the additional layer (15) is greater than 0.2 mm, in particular 0,4 mm.

49. Storage element carrier according to one of claims the 39 to 48, **characterized in that** the thickness (T22) of the second part (22) is in the range of 0.8 to 1.3 mm, in particular 1.0 to 1.2 mm.

50. Storage element carrier according to one of the claims 39 to 49, **characterized in that** the thickness (T21) of the first part (21) is about 0.8 mm.

51. Storage element carrier according to one of claims 39 to 50, **characterized in that** the storage element carrier (20) has a polygonal shape, in particular rectangular or quadratic.

52. Storage element carrier according to one of the claims 39 to 51, **characterized in that** the storage element (30) is suitable to be read by a reading device.

53. Storage element carrier according to one of the claims 39 to 52, **characterized in that** the storage element (30) is an electronically readable device, in particular an integrated circuit.

54. Storage element carrier according to one of the claims 39 to 53, **characterized in that** the storage element carrier (20) is of ISO format.

55. Method of obtaining an optical recording medium (10) according to one of the claims 1 to 38, **characterized by** the following steps:
providing a storage element carrier (20) according to one of the claims 39 to 54 and breaking away the second part (22) of the storage element carrier (22).
